(19)

Europäisches
Patentamt
European
Patent Office
Office européen
des brevets

(11) **EP 3 298 067 B1**

(12) **EUROPEAN PATENT SPECIFICATION**

(45) Date of publication and mention
of the grant of the patent:
**17.07.2019 Bulletin 2019/29**

(21) Application number: **16723354.3**

(22) Date of filing: **13.05.2016**

(51) Int Cl.:
***C08J 3/00*** *(2006.01)*    ***C08L 23/06*** *(2006.01)*

(86) International application number:
**PCT/EP2016/060884**

(87) International publication number:
**WO 2016/184812 (24.11.2016 Gazette 2016/47)**

(54) **PROCESS FOR PRODUCING POLYETHYLENE COMPOSITION**

VERFAHREN ZUR HERSTELLUNG EINER POLYETHYLENZUSAMMENSETZUNG

PROCÉDÉ DE PRODUCTION DE COMPOSITIONS DE POLYÉTHYLÈNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **20.05.2015 EP 15168367**

(43) Date of publication of application:
**28.03.2018 Bulletin 2018/13**

(73) Proprietor: **Borealis AG
1220 Vienna (AT)**

(72) Inventors:
• **ÄÄRILÄ, Jari
06100 Porvoo (FI)**

• **KELA, Jarmo
06100 Porvoo (FI)**
• **JEREMIC, Dusan
4040 Linz (AT)**

(74) Representative: **Maiwald Patent- und
Rechtsanwaltsgesellschaft mbH
Elisenhof
Elisenstraße 3
80335 München (DE)**

(56) References cited:
**EP-A1- 2 256 158    WO-A1-2014/003926**

**EP 3 298 067 B1**

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

## Description

The present invention relates to a process for producing a blend of two different polyethylene polymers and to a use for reducing the gel content of a polyethylene produced in the presence of a coordination catalyst.

Unimodal polyethylene (PE) polymers, for instance unimodal PE produced using a single site catalyst, are usually used for film application. Unimodal PE polymers have for instance good optical properties, like low haze, but e.g. the melt processing of such polymers is not satisfactory in production point of view and may cause quality problems of the final product as well. Multimodal PE polymers with two or more different polymer components are better to process, but e.g. melt homogenisation of the multimodal PE may be problematic resulting to inhomogeniuos final polymer composition evidenced e.g. with high gel content of the final product. Moreover, the type of the extruder (e.g. screw system) may have an effect on homogeneity of the final polymer composition depending on the the type of PE polymer.

WO2014058656 of Dow discloses a blend of low density polyethylene (LDPE) and linear low density polyethylene (LLDPE). The LLDPE can be of any type, preferably unimodal LLDPE produced in a single gas phase reactor as shown also in examples. The blend can be produced using a single screw or twinscrew extruder, or, alternatively, dry blended before the film production step. The focus is in film applications and inventive step is based on tear and optical properties, i.e. gloss and haze.

WO2014003926 of Dow discloses a blend of low density polyethylene (LDPE) and linear low density polyethylene (LLDPE). The blend comprises LDPE in an amount of 0.5 to 4 wt%. The blend can be produced using a single screw or twinscrew extruder. The blend is stated to be suitable for blown film, providing improved output rates and haze or gloss.

There is a continuous need for multimodal PE polymers which enable tailored property combinations in order to meet the increasing demands of the end application producers and their customers, and which also have industrially feasible processing performance to meet e.g. the requirements of continuously developing equipment technology and to reduce the production costs.

## Figures

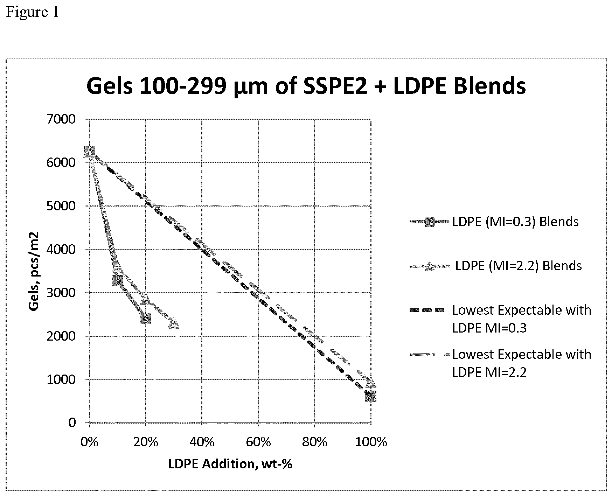

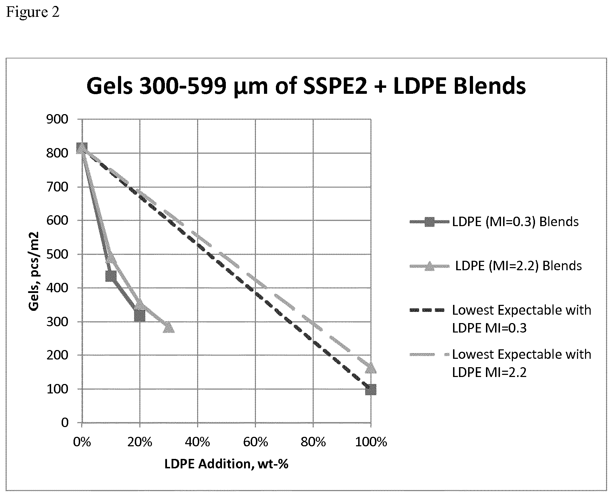

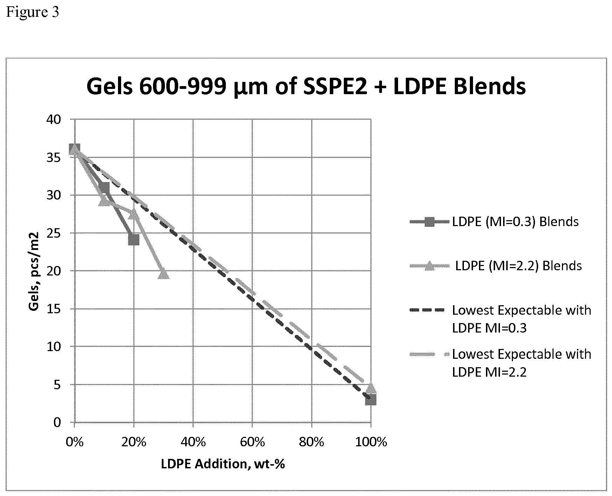

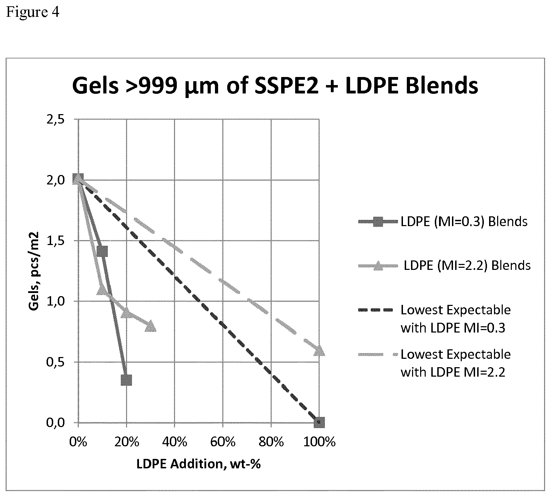

Figures 1-4 illusterate the measured and calculated "lowest expectable" gel contents of the blends of SSPE2 + LDPE in different size categories. In the figures the "lowest expectable" indicated as the dashed lines ----- and, respectively, -- -- --.

## Description of the invention

The present invention is directed to a process for producing by extrusion a polymer composition, wherein the process comprises the steps of:

(i) subjecting into a twinscrew extruder

(a) 60 to 99 wt% of a multimodal polyethylene produced in the presence of a single site catalyst (ssPE) which has

- an $MFR_2$ (according to ISO 1133 at 190°C under 2.16 kg load) of less than 7 g/10 min,

(b) 1 to 40 wt% of a polyethylene having SHI (2.7/210) of at least 10 (when measured as described below under Determination methods) (PE); based on the combined amount (100 wt%) of ssPE (a) and PE (b); and
(c) optionally additives;

(ii) meltmixing the components (a) to (c) in the twinscrew extruder to form a meltmix of the polymer composition; and
(iii) providing the obtained meltmix polymer composition into a solid form.

The polymer composition of the invention is referred herein also shortly as "polymer composition" "multimodal polyethylene produced in the presence of a single site catalyst (ssPE) (a)" is referred herein also shortly as "ssPE (a)". The "polyethylene (PE) having SHI (2.7/210) of at least 10" is referred herein also shortly as "PE having SHI (2.7/210) of at least 10 (b)" or "PE (b)".

Term "multimodal" in context of ssPE (a) means herein multimodality e.g. with repect to any one or more of melt flow rate (MFR), density and/or comonomer content. The term "multi" includes "bimodal" composition consisting of two components having the difference in said MFR, density and/or comonomer content.

"Meltmixing" or "melt homogenisation" means herein mixing above the melting point of at least the major polymer component(s) of the obtained mixture and is carried out for example, without limiting to, in a temperature of at least 15°C above the melting or softening point of polymer component(s).

Surprisingly, the specific twinscrew extrusion process of the invention results at a polymer composition having surprisingly lower content of gels (called also as gel level) and less flow defects (expressed as described below and as measured according to method as described under Determination methods) than could be expected based on gel content of the ssPE (a) and PE (b) components alone.

Accordingly, it is unexpected that the blending process of the invention reduces the gel content of ssPE (a) both in cases where the gel content is already low and also in cases where the gel content is high. The reduction of gel content is especially useful for the end use applications in which the lowest possible gel content is required or e.g. in cases where occasional increase in gel content of a polyethylene occur during the production of the polyethylene due to disturbance in the polymerisation conditions or compounding process (e.g. due to extrusion equipment or extrusion conditions).

Further unexpectedly, the processs brings flexibility to tailor polymer compositions depending on the desired end application.

Moreover the process results in polymer composition with advantageous rheology properties contributing to the industrially feasible processing properties.

The obtained property balance is highly feasible e.g. for film applications.

The invention is further directed to a use of a polyethylene (PE) having SHI (2.7/210) of at least 10 (when measured as described below under Determination methods) for reducing the gel content of a polyethylene polymer produced in the presence of a coordination catalyst;

- by adding

  - 1 to 40 wt% of the polyethylene having SHI (2.7/210) of at least 10 (b) to
  - 60 to 99 wt% of the polyethylene polymer produced in the presence of a coordination catalyst; based on the combined amount (100 wt%) of polyethylene having SHI (2.7/210) of at least 10 (b) and the polyethylene polymer produced in the presence of a coordination catalyst; in an extruder;

- by meltmixing the components in the extruder to form a meltmix of the polymer composition; and
- by providing the obtained meltmix polymer composition into a solid form.

The term "polyethylene produced in the presence of a coordination catalyst" means herein a single site catalyst, including metallocene catalyst and a Ziegler Natta catalyst, which both catalysts have a well known meaning.

The following preferable embodiments, properties and subgroups of the process, extruder used in the process, the polymer composition, ssPE (a) and PE (b) of the polymer composition, including the preferable ranges thereof, and of the use of the invention are independently generalisable so that they can be used in any order or combination to further define the preferable embodiments of the process, the resulting polymer composition and the use the invention.

**Detailed description of the invention**

Preferably in step (i) of the process of the invention

- the ssPE (a) is subjected in an amount of 60 to 98, preferably 70 to 95, preferably 75 to 95, wt%, of a polyethylene polymer; and
- the PE having SHI (2.7/210) of at least 10 (b) is subjected in an amount of 2 to 40, preferably 5 to 30, preferably 5 to 25, wt%.

The twinscrew used in the process of the invention is preferably selected from a co-rotating or a counter-rotating twinscrew extruder.

The twinscrew used in the process of the invention has preferably one or more in any order, preferably all, of the following properties:

- Energy input (SEI) is from about 120 to 400, preferably 130 to about 400, preferably from 140 to 350, kWh/ton polymer,
- Residence time of 0.2 to 5 min, and/or
- Screw comprises at least one mixing zone.

The temperature in step (ii) is preferably at least 20°C above the melting or softening point of polymer component(s).

The twinscrew extruders and the meaning of mixing zone are well known in the extruder field. Nonlimiting examples of co- and counter-rotating twinscrew extruder producers are Kobe Steel, Japan Steel Work (JSW) and Coperion.

Preferably, in step (iii) of the process of the invention the solid form of polymer composition is provided as a solid powder or pellets, preferably as solid pellets.

Preferably, the process of the invention comprises after the step (iii) a further step of:

(iv) using the obtained polymer composition in solid form, preferably in form of solid pellets, for producing an article, preferably a film selected from a monolayer or multilayer film.

The polymer composition resulting from the process of the invention has preferably a gel content less than the gel content of PE (a) alone.

More preferably the gel content of the polymer composition is less than calculated from the linear formulation (I) based on the weight fractions and gel contents of the ssPE (a) and PE having SHI (2.7/210) of at least 10 (b) as follows:

(weight fraction of ssPE (a))*(gel content of ssPE (a))+(weight fraction of PE (b))*(gel content of

PE (b))          (I),

when measured from a cast film sample as described below under Determination methods and wherein the weight fraction of ssPE (a) and weight fraction of PE (b) totals on 1.0.

**Polymer composition**

The polymer composition may contain further polymer components and optionally additives and/or fillers.

Accordingly, the polymer composition may comprise further polymeric components other than ssPE (a) and PE (b). Preferably the polymer composition consists of ssPE (a) and PE (b) as the polymeric components.

The optional additives and fillers and the used amounts thereof are conventional, e.g. conventional in the field of film applications. Examples of such additives are, among others, antioxidants, process stabilizers, UV-stabilizers, pigments, fillers, antistatic additives, antiblock agents, nucleating agents, acid scavengers as well as polymer processing agent (PPA). It is noted herein that the additives may partly be present in the ssPE (a), PE (b) and/or mixed with ssPE (a) and PE (b) during the step (i) and/or step (ii) for producing the polymer composition.

It is understood herein that any of the additives and/or fillers can optionally be added in so called master batch which comprises the respective additive(s) together with a carrier polymer. In such case the carrier polymer is not calculated to polymeric components as ssPE (a) and PE (b) of the polymer composition, but to the amount of the respective additive(s), based on the total amount of polymer composition (100wt%).

More preferably, the polymer composition consists of the ssPE (a) and PE (b) and additive(s).

**ssPE (a)**

The ssPE (a) has preferably an $MFR_2$ of 0.5 to 6, g/10 min (according to ISO 1133 at 190°C under 2.16 kg load).

The ssPE (a) has preferably a SHI (2.7/210) of 10 or below, preferably 2 to 8, when determined according to the "Dynamic Shear Measurements" as defined below under Determination methods.

The ss PE (a) preferably comprises at least two different comonomers selected from alpha-olefins having from 4 to 10 carbon atoms, more preferably 1-butene and 1-hexene.

The ssPE (a) is preferably a multimodal polyethylene polymer (a),

- which comprises at least

    - an ethylene polymer component (A) and
    - an ethylene polymer component (B) which is different from the ethylene polymer component (A).

The "multimodal polyethylene polymer (a)" embodiment of ssPE (a) is referred herein also shortly as "multimodal polyethylene (a)" or as "polyethylene (a)" The ethylene polymer component (A) and the ethylene polymer component (B), when both mentioned, are also be referred as "ethylene polymer component (A) and (B)".

Accordingly in this embodiment the ssPE (a) is multimodal e.g. with repect to any one or more of melt flow rate (MFR), density and/or comonomer content of the ethylene polymer components (A) and (B), i.e. the ethylene polymer components (A) and (B) have different MFR, density and/or comonomer values. The ethylene polymer component (A) and the ethylene polymer component (B) of the multimodal ethylene polymer (a) have been produced under different polymerization conditions resulting at least in different MFR, density and/or comonomer content.

The multimodal polyethylene polymer (a) is more preferably a multimodal linear low density polyethylene (LLDPE) which has a density of is of 910 to 935, preferably of 915 to 930, kg/m$^3$.

Preferably, the multimodal polyethylene (a), preferably the multimodal LLDPE, comprises

- an ethylene polymer component (A) and
- an ethylene polymer component (B) which is different from the ethylene polymer component (A); and wherein the multimodal polyethylene (a) is multimodal at least with respect to comonomer type and/or comonomer content, preferably wherein the alpha-olefin comonomer having from 4 to 10 carbon atoms of ethylene polymer component (A) is different from the alpha-olefin comonomer having from 4 to 10 carbon atoms of ethylene polymer component (B).

The ethylene polymer component (A) has preferably alpha-olefin comonomer having from 4 to 10 carbon atoms in an amount (mol%) of 0.03 to 5.0 mol%, preferably of 0.05 to 4.0, more preferably of 0.1 to 3.0, even more preferably of 0.1 to 2.0, mol%.

Preferably the alpha-olefin comonomer having from 4 to 10 carbon atoms of ethylene polymer component (A) is 1-butene.

The alpha-olefin comonomer having from 4 to 10 carbon atoms of ethylene polymer component (B) is 1-hexene.

The comonomer content of component (A) and (B) can be measured, or, in case, and preferably, one of the components is produced first and the other thereafter in the presence of the first produced in so called multistage process, then the comonomer content of the first produced component, e.g. component (A), can be measured and the comonomer content of the other component, e.g. component (B), can be calculated according to following formula:

Comonomer content (mol-%) in component B = (comonomer content (mol-%) in final product – (weight fraction of component A * comonomer content (mol-%) in component A)) / (weight fraction of component B),

wherein the weight fraction of component A + weight fraction of component B totals on 1.0.

The multimodal polyethylene (a) is preferably further multimodal with respect to density, preferably the density of the ethylene polymer component (A) is different, preferably higher, than the density of the ethylene polymer component (B). If the density of one of the components (A) or (B) cannot be measured, then it can be calculated similarly to the above comonomer content calculation based on the weight ratios of components (A) and (B), the known (measured) density value of the other of the components (A) and (B) and the known (measured) density value polyethylene (a).

The density of the ethylene polymer component (A) is preferably of 925 to 950, kg/m$^3$.

The ethylene polymer component (A) has preferably an MFR$_2$ of 1 to 400 g/10 min.

If the MFR$_2$ of ethylene polymer components, e.g. component (B), can not be measured, because it cannot be isolated from the mixture of at least ethylene polymer components (A) or (B), then it can be calculated (MI$_2$ below) using so called Hagström equation (Hagström, The Polymer Processing Society, Europe/Africa Region Meeting, Gothenburg, Sweden, August 19-21, 1997):

$$MI_b = \left( w \cdot MI_1^{-\frac{w-b}{a}} + (1-w) \cdot MI_2^{-\frac{w-b}{a}} \right)^{-a \cdot w^b} \qquad (eq.\, 3)$$

According to said Hagström, in said equation (eq.3), a=5.2 and b=0.7 for MFR$_2$. Furthermore, w is the weight fraction of the other ethylene polymer component, e.g. component (A), having higher MFR. The ethylene polymer component (A) can thus be taken as the component 1 and the ethylene polymer component (B) as the component 2. MI$_b$ is the MFR$_2$ of the final polyethylene (a). The MFR$_2$ of the ethylene polymer component (B) (MI$_2$) can then be solved from equation 1 when the MFR$_1$ of the ethylene polymer component (A) (MI$_1$) and the final polymer of ethylene (a) (MI$_b$) are known.

Preferably, the multimodal polyethylene (a) comprises the ethylene polymer component (A) in an amount of 30 to 70, preferably of 40 to 60, more preferably of 35 to 50, more preferably 40 to 50, wt% and the ethylene polymer component (B) in an amount of 70 to 30, preferably of 60 to 40, more preferably of 50 to 65, more preferably 50 to 60, wt%, based on the total amount (100 wt%) of the polymer of ethylene (a). Most preferably, the polyethylene (a) consists of the ethylene polymer components (A) and (B) as the sole polymer components. Accordingly, the split between ethylene polymer component (A) to ethylene polymer component (B) is of (30 to 70):(70 to 30) preferably of (40 to 60):(60 to 40), more preferably of (35 to 50):(65 to 50), more preferably of (40 to 50):(50 to 60), wt%.

Accordingly, the multimodal polyethylene (a) is preferably produced using a coordination catalyst. More preferably, the ethylene polymer components (A) and (B) of the polymer of ethylene (a) are preferably produced using a single site catalyst, which includes metallocene catalyst and non-metallocene catalyst, which all terms have a well-known meaning in the art. The term "single site catalyst" means herein the catalytically active metallocene compound or complex combined with a cocatalyst. The metallocene compound or complex is referred herein also as organometallic compound (C).

The organometallic compound (C) comprises a transition metal (M) of Group 3 to 10 of the Periodic Table (IUPAC 2007) or of an actinide or lanthanide.

The term "an organometallic compound (C)" in accordance with the present invention includes any metallocene or non-metallocene compound of a transition metal which bears at least one organic (coordination) ligand and exhibits the catalytic activity alone or together with a cocatalyst. The transition metal compounds are well known in the art and the present invention covers compounds of metals from Group 3 to 10, e.g. Group 3 to 7, or 3 to 6, such as Group 4 to 6 of the Periodic Table, (IUPAC 2007), as well lanthanides or actinides.

In an embodiment the organometallic compound (C) has the following formula (I):

$$(L)_m R_n M X_q \qquad (I)$$

wherein

"M" is a transition metal (M) transition metal (M) of Group 3 to 10 of the Periodic Table (IUPAC 2007),
each "X" is independently a monoanionic ligand, such as a $\sigma$-ligand,
each "L" is independently an organic ligand which coordinates to the transition metal "M",
"R" is a bridging group linking said organic ligands (L),
"m" is 1, 2 or 3, preferably 2
"n" is 0, 1 or 2, preferably 1,
"q" is 1, 2 or 3, preferably 2 and
m+q is equal to the valency of the transition metal (M).

"M" is preferably selected from the group consisting of zirconium (Zr), hafnium (Hf), or titanium (Ti), more preferably selected from the group consisting of zirconium (Zr) and hafnium (Hf). "X" is preferably a halogen, most preferably Cl.

Most preferably the organometallic compound (C) is a metallocene complex which comprises a transition metal compound, as defined above, which contains a cyclopentadienyl, indenyl or fluorenyl ligand as the substituent "L". Further, the ligands "L" may have substituents, such as alkyl groups, aryl groups, arylalkyl groups, alkylaryl groups, silyl groups, siloxy groups, alkoxy groups or other heteroatom groups or the like. Suitable metallocene catalysts are known in the art and are disclosed, among others, in WO-A-95/12622, WO-A-96/32423, WO-A-97/28170, WO-A-98/32776, WO-A-99/61489, WO-A-03/010208, WO-A-03/051934, WO-A-03/051514, WO-A-2004/085499, EP-A-1752462 and EP-A-1739103

Most preferred single site catalyst is a metallocene catalyst which means the catalytically active metallocene complex, as defined above, together with a cocatalyst, which is also known as an activator. Suitable activators are metal alkyl compounds and especially aluminium alkyl compounds known in the art. Especially suitable activators used with metallocene catalysts are alkylaluminium oxy-compounds, such as methylalumoxane (MAO), tetraisobutylalumoxane (TIBAO) or hexaisobutylalumoxane (HIBAO).

More preferably the ethylene polymer components (A) and (B) of the polymer of ethylene (a) are produced in the presence of the same metallocene catalyst.

The multimodal polyethylene (a) may be produced in any suitable polymerization process known in the art. Into the polymerization zone is also introduced ethylene, optionally an inert diluent, and optionally hydrogen and/or comonomer. The ethylene polymer component (A) is preferably produced in a first polymerization zone and the ethylene polymer component (B) is produced in a second polymerization zone. The first polymerization zone and the second polymerization zone may be connected in any order, i.e. the first polymerization zone may precede the second polymerization zone, or the second polymerization zone may precede the first polymerization zone or, alternatively, polymerization zones may be connected in parallel. However, it is preferred to operate the polymerization zones in cascaded mode. The polymerization zones may operate in slurry, solution, or gas phase conditions or their combinations. Suitable processes comprising cascaded slurry and gas phase polymerization stages are disclosed, among others, in WO-A-92/12182 and WO-A-96/18662.

It is often preferred to remove the reactants of the preceding polymerization stage from the polymer before introducing it into the subsequent polymerization stage. This is preferably done when transferring the polymer from one polymerization stage to another.

The catalyst may be transferred into the polymerization zone by any means known in the art.

The polymerization, preferably of the ethylene polymer component (A), in the first polymerization zone is preferably conducted in slurry. Then the polymer particles formed in the polymerization, together with the catalyst fragmented and dispersed within the particles, are suspended in the fluid hydrocarbon. The slurry is agitated to enable the transfer of reactants from the fluid into the particles.

The polymerization usually takes place in an inert diluent, typically a hydrocarbon diluent such as methane, ethane, propane, n-butane, isobutane, pentanes, hexanes, heptanes, octanes etc., or their mixtures. Preferably the diluent is a low-boiling hydrocarbon having from 1 to 4 carbon atoms or a mixture of such hydrocarbons and preferred diluent is propane.

The ethylene content in the fluid phase of the slurry may be from 2 to about 50 % by mole, preferably from about 2 to about 20 % by mole and in particular from about 3 to about 12 % by mole.

The temperature in the slurry polymerization is typically from 50 to 115 °C, preferably from 60 to 110 °C and in particular from 70 to 100 °C. The pressure is from 1 to 150 bar, preferably from 10 to 100 bar.

The slurry polymerization may be conducted in any known reactor used for slurry polymerization. Such reactors include a continuous stirred tank reactor and a loop reactor. It is especially preferred to conduct the polymerization in loop reactor. In such reactors the slurry is circulated with a high velocity along a closed pipe by using a circulation pump. Loop reactors are generally known in the art and examples are given, for instance, in US-A-4582816, US-A-3405109, US-A-3324093, EP-A-479186 and US-A-5391654.

It is sometimes advantageous to conduct the slurry polymerization above the critical temperature and pressure of the fluid mixture. Such operation is described in US-A-5391654. In such operation the temperature is typically from 85 to 110 °C, preferably from 90 to 105 °C and the pressure is from 40 to 150 bar, preferably from 50 to 100 bar.

The slurry may be withdrawn from the reactor either continuously or intermittently. A preferred way of intermittent withdrawal is the use of settling legs where slurry is allowed to concentrate before withdrawing a batch of the concentrated slurry from the reactor. The continuous withdrawal is advantageously combined with a suitable concentration method, e.g. as disclosed in EP-A-1310295 and EP-A-1591460.

Hydrogen may be fed into the reactor to control the molecular weight of the polymer as known in the art. Furthermore, one or more alpha-olefin comonomers are added into the reactor e.g. to control the density of the polymer product. The actual amount of such hydrogen and comonomer feeds depends on the catalyst that is used and the desired melt index (or molecular weight) and density (or comonomer content) of the resulting polymer.

The polymerization, preferably of the ethylene polymer component (B), in the second polymerization zone is preferably conducted in gas phase, preferably in a fluidized bed reactor, in a fast fluidized bed reactor or in a settled bed reactor or in any combination of these. The polymerization in the second polymerization zone is more preferably conducted in a fluidized bed gas phase reactor, wherein ethylene is polymerized together with at least one comonomer in the presence of a polymerization catalyst and, preferably in the presence of the reaction mixture from the first polymerization zone comprising the ethylene polymer component (A) in an upwards moving gas stream. The reactor typically contains a fluidized bed comprising the growing polymer particles containing the active catalyst located above a fluidization grid.

The polymer bed is fluidized with the help of the fluidization gas comprising the olefin monomer, eventual comonomer(s), eventual chain growth controllers or chain transfer agents, such as hydrogen, and eventual inert gas. The fluidization gas is introduced into an inlet chamber at the bottom of the reactor. One or more of the above-mentioned components may be continuously added into the fluidization gas to compensate for losses caused, among other, by reaction or product withdrawal.

The fluidization gas passes through the fluidized bed. The superficial velocity of the fluidization gas must be higher that minimum fluidization velocity of the particles contained in the fluidized bed, as otherwise no fluidization would occur. On the other hand, the velocity of the gas should be lower than the onset velocity of pneumatic transport, as otherwise the whole bed would be entrained with the fluidization gas. The gas is heated by the polymerisation reaction heat.

The unreacted fluidization gas is removed from the top of the reactor and cooled in a heat exchanger to remove the heat of reaction. The gas is cooled to a temperature which is lower than that of the bed to prevent the bed from heating because of the reaction. It is also possible to cool the gas to a temperature where a part of it condenses, as well known in the art.

The gas is then compressed and recycled into the inlet chamber of the reactor. Prior to the entry into the reactor fresh reactants are introduced into the fluidization gas stream to compensate for the losses caused by the reaction and product withdrawal. It is generally known to analyze the composition of the fluidization gas and introduce the gas components to keep the composition constant. The actual composition is determined by the desired properties of the product and the catalyst used in the polymerization.

The catalyst may be introduced into the reactor in various ways, either continuously or intermittently. Where the gas phase reactor is a part of a reactor cascade the catalyst is usually dispersed within the polymer particles from the preceding polymerization stage. The polymer particles may be introduced into the gas phase reactor as disclosed in EP-A-1415999 and WO-A-00/26258. Especially if the preceding reactor is a slurry reactor it is advantageous to feed the slurry directly into the fluidized bed of the gas phase reactor as disclosed in EP-A-887379, EP-A-887380, EP-A-887381 and EP-A-991684.

Also antistatic agent(s), such as water, ketones, aldehydes and alcohols, may be introduced into the gas phase reactor if needed. The reactor may also include a mechanical agitator to further facilitate mixing within the fluidized bed.

Typically the fluidized bed polymerization reactor is operated at a temperature within the range of from 50 to 100 °C, preferably from 65 to 90 °C. The pressure is suitably from 10 to 40 bar, preferably from 15 to 30 bar.

The polymeric product may be withdrawn from the gas phase reactor either continuously or intermittently.

The polymerization of at least ethylene polymer component (A) and ethylene polymer component (B) in the first and second polymerization zones may be preceded by a prepolymerization step. The purpose of the prepolymerization is to polymerize a small amount of polymer onto the catalyst at a low temperature and/or a low monomer concentration. By prepolymerization it is possible to improve the performance of the catalyst in slurry and/or modify the properties of the final polymer. The prepolymerization step may be conducted in slurry or in gas phase. Preferably prepolymerization is conducted in slurry, preferably in a loop reactor. The prepolymerization is then preferably conducted in an inert diluent, preferably the diluent is a low-boiling hydrocarbon having from 1 to 4 carbon atoms or a mixture of such hydrocarbons.

The temperature in the prepolymerization step is typically from 0 to 90 °C, preferably from 20 to 80 °C and more preferably from 40 to 70 °C.

The pressure is not critical and is typically from 1 to 150 bar, preferably from 10 to 100 bar.

The catalyst components are preferably all introduced to the prepolymerization step. Preferably the reaction product of the prepolymerization step is then introduced to the first polymerization zone. The prepolymer component is calculated to the amount of the component that is produced in the first actual polymerisation step after the prepolymerisation step, preferably to the amount of the ethylene polymer component (A).

It is within the knowledge of a skilled person to adapt the polymerization conditions in each step as well as feed streams and resident times to obtain the claimed multimodal polymer of ethylene (a).

The multimodal polyethylene (a) comprising at least, and preferably solely, the ethylene polymer components (A) and (B) obtained from the second polymerization zone, which is preferably a gas phase reactor as described above, is the subjected to conventional post reactor treatment to remove i.a. the unreacted components.

Thereafter, typically, the polyethylene (a) can be subjected to the step (i) of the process of the invention as obtained from the above post reactor treatment or is first pelletised in an extruder in a conventional manner and the pellets are then subjected to said step (i).

**PE (b)**

PE (b) has preferably a SHI (2.7/210) of 10 to 400, preferably 15 to 300, preferably 17 to 250.

PE (b) has preferably an $MFR_2$ (according to ISO 1133 at 190°C under 2.16 kg load) of less than 6 g/10 min, preferably $MFR_2$ of 0.1 to 5, preferably of 0.2 to 4, g/10 min.

PE (b) has preferably a density of 915 to 940, preferably 915 to 935, $kg/m^3$.

The PE (b) is preferably selected from a low density polyethylene produced in the presence of a radical initiator(s) (LDPE) or a linear low density polyethylene produced using a Ziegler Natta catalyst (znLLDPE), more preferably the PE having SHI (2.7/210) of at least 10 (b) is an LDPE. LDPE is preferably a LDPE homopolymer.

LDPE, preferably LDPE homopolymer, has preferably a SHI (2.7/210) of 30 to 400, preferably 35 to 300, more preferably 40 to 250.

The LDPE can be produced by polymerising ethylene in a high pressure (HP) process using free radical polymerization in the presence of one or more initiator(s) and optionally using a chain transfer agent (CTA) to control the MFR of the polymer. The HP reactor can be e.g. a well known tubular or autoclave reactor or a mixture thereof. The high pressure (HP) polymerisation and the adjustment of process conditions for further tailoring the other properties of the polyolefin depending on the desired end application are well known and described in the literature, and can readily be used by a skilled person. Suitable polymerisation temperatures range up to 400 °C, preferably from 80 to 350°C and pressure from 70 MPa, preferably 100 to 400 MPa, more preferably from 100 to 350 MPa. The high pressure polymerization is generally performed at pressures of 100 to 400 MPa and at temperatures of 80 to 350 °C. Such processes are well known and well documented in the literature and will be further described later below. Further details of the production of ethylene (co)polymers by high pressure radical polymerization can be found i.a. in the Encyclopedia of Polymer Science and Engineering, Vol. 6 (1986), pp 383-410 and Encyclopedia of Materials: Science and Technology, 2001 Elsevier Science Ltd.: "Polyethylene: High-pressure, R.Klimesch, D.Littmann and F.-O. Mähling pp. 7181-7184.

The znPE can be produced as described above for the ssPE, except that a Ziegler Natta catalyst, which has a well known meaning, is used instead of a single site catalyst. The Ziegler Natta catalyst can be any conventional Ziegler Natta catalyst for producing polyethylene. Reference is made, without limiting to, to WO 2004/055068 and WO 2004/055069 of Borealis and EP 0 810 235.

**The use of PE (b)**

The use preferably comprises a process comprising the steps of:

(i) subjecting into a twinscrew extruder

(a) 60 to 99, preferably 60 to 98, preferably 70 to 95, preferably 75 to 95, wt% of a polyethylene produced in the presence of a single site catalyst (ssPE) and having an $MFR_2$ (according to ISO 1133 at 190°C under 2.16 kg load) of less than 7 g/10 min;
(b) 1 to 40, preferably 2 to 40, preferably 5 to 30, preferably 5 to 25, wt% of a polyethylene having SHI (2.7/210) of at least 10 (when measured as described above under Determination methods) (PE); based on the combined amount (100 wt%) of ssPE (a) and PE (b); and
(c) optionally additives;

(ii) meltmixing the components (a) to (c) in the twinscrew extruder to form a meltmix of the polymer composition;
(iii) providing the obtained meltmix polymer composition into a solid form; and

as defined above or in claims, including the preferable embodiments of the components.

**Determination methods**

Unless otherwise stated in the description or in the experimental part, the following methods were used for the property determinations of the polymer composition, polar polymer and/or any sample preparations thereof as specified in the text or expereimental part.

**Melt Flow Rate**

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR is determined at 190 °C for polyethylene. MFR may be determined at different loadings such as 2.16 kg ($MFR_2$), 5 kg ($MFR_5$) or 21.6 kg ($MFR_{21}$).

**Density**

Density of the polymer was measured according to ASTM; D792, Method B (density by balance at 23°C) on compression moulded specimen prepared according to EN ISO 1872-2 (February 2007) and is given in $kg/m^3$.

**Comonomer contents:**

**Quantification of microstructure by NMR spectroscopy**

Quantitative nuclear-magnetic resonance (NMR) spectroscopy was used to quantify the comonomer content of the polymers.
Quantitative $^{13}C\{^1H\}$ NMR spectra recorded in the molten-state using a Bruker Advance III 500 NMR spectrometer operating at 500.13 and 125.76 MHz for $^1H$ and $^{13}C$ respectively. All spectra were recorded using a $^{13}C$ optimised 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification. {klimke06, parkinson07, castignolles09} Standard single-pulse excitation was employed utilising the NOE at short recycle delays {pollard04, klimke06} and the RS-HEPT decoupling scheme {fillip05,griffin07}. A total of 1024 (1k) transients were acquired per spectra.
Quantitative $^{13}C\{^1H\}$ NMR spectra were processed, integrated and relevant quantitative properties determined from the integrals. All chemical shifts are internally referenced to the bulk methylene signal ($\delta+$) at 30.00 ppm.
The amount of ethylene was quantified using the integral of the methylene ($\delta+$) sites at 30.00 ppm accounting for the number of reporting sites per monomer:

$$E = I_{\delta+} / 2$$

the presence of isolated comonomer units is corrected for based on the number of isolated comonomer units present:

$$Etotal = E + (3*B + 2*H) / 2$$

where B and H are defined for their respective comonomers. Correction for consecutive and non-consecutive commoner incorporation, when present, is undertaken in a similar way. Characteristic signals corresponding to the incorporation of 1 -butene were observed and the comonomer fraction calculated as the fraction of 1 -butene in the polymer with respect to all monomer in the polymer:

$$fBtotal = ( Btotal / ( Etotal + Btotal + Htotal ) )$$

The amount isolated 1-butene incorporated in EEBEE sequences was quantified using the integral of the $_*B2$ sites at 38.3 ppm accounting for the number of reporting sites per comonomer:

$$B = I_{*B2}$$

The amount consecutively incorporated 1 -butene in EEBBEE sequences was quantified using the integral of the $\alpha\alpha B2B2$ site at 39.4 ppm accounting for the number of reporting sites per comonomer:

$$BB = 2 * I\alpha\alpha B2B2$$

The amount non consecutively incorporated 1 -butene in EEBEBEE sequences was quantified using the integral of the $\beta\beta B2B2$ site at 24.7 ppm accounting for the number of reporting sites per comonomer:

$$BEB = 2 * I\beta\beta B2B2$$

Due to the overlap of the *B2 and *$\beta$B2B2 sites of isolated (EEBEE) and non-consecutivly incorporated (EEBEBEE) 1-butene respectively the total amount of isolated 1-butene incorporation is corrected based on the amount of non-consecutive 1-butene present:

$$B = I_{*B2} - 2 * I_{\beta\beta B2B2}$$

The total 1-butene content was calculated based on the sum of isolated, consecutive and non consecutively incorporated 1-butene:

$$Btotal = B + BB + BEB$$

The total mole fraction of 1-butene in the polymer was then calculated as:

$$fB = ( Btotal / ( Etotal + Btotal + Htotal ) )$$

Characteristic signals corresponding to the incorporation of 1 -hexene were observed and the comonomer fraction calculated as the fraction of 1 -hexene in the polymer with respect to all monomer in the polymer:

$$fHtotal = ( Htotal / ( Etotal + Btotal + Htotal ) )$$

The amount isolated 1-hexene incorporated in EEHEE sequences was quantified using the integral of the $*B4$ sites at 39.9 ppm accounting for the number of reporting sites per comonomer:

$$H = I_{*B4}$$

The amount consecutively incorporated 1-hexene in EEHHEE sequences was quantified using the integral of the $\alpha\alpha B4B4$ site at 40.5 ppm accounting for the number of reporting sites per comonomer:

$$HH = 2 * I\alpha\alpha B4B4$$

The amount non consecutively incorporated 1-hexene in EEHEHEE sequences was quantified using the integral of the $\beta\beta B4B4$ site at 24.7 ppm accounting for the number of reporting sites per comonomer:

$$HEH = 2 * I\beta\beta B4B4$$

The total mole fraction of 1-hexene in the polymer was then calculated as:

$$fH = ( Htotal / ( Etotal + Btotal + Htotal )$$

The mole percent comonomer incorporation is calculated from the mole fraction:

$$B [mol\%] = 100 * fB$$

$$H [mol\%] = 100 * fH$$

The weight percent comonomer incorporation is calculated from the mole fraction:

$$B [wt\%] = 100 * ( fB * 56.11) / ( (fB * 56.11) + (fH * 84.16) + ((1-(fB + fH)) * 28.05) )$$

$$H [wt\%] = 100 * ( fH * 84.16 ) / ( (fB * 56.11) + (fH * 84.16) + ((1-(fB + fH)) * 28.05) )$$

References:

klimke06
Klimke, K., Parkinson, M., Piel, C., Kaminsky, W., Spiess, H.W., Wilhelm, M., Macromol. Chem. Phys. 2006;207:382.
parkinson07
Parkinson, M., Klimke, K., Spiess, H.W., Wilhelm, M., Macromol. Chem. Phys. 2007;208:2128.
pollard04
Pollard, M., Klimke, K., Graf, R., Spiess, H.W., Wilhelm, M., Sperber, O., Piel, C., Kaminsky, W., Macromolecules 2004;37:813.
filip05
Filip, X., Tripon, C., Filip, C., J. Mag. Resn. 2005, 176, 239
griffin07
Griffin, J.M., Tripon, C., Samoson, A., Filip, C., and Brown, S.P., Mag. Res. in Chem. 2007 45, S1, S198
castignolles09
Castignolles, P., Graf, R., Parkinson, M., Wilhelm, M., Gaborieau, M., Polymer 50 (2009) 2373 busico01
Busico, V., Cipullo, R., Prog. Polym. Sci. 26 (2001) 443
busico97
Busico, V., Cipullo, R., Monaco, G., Vacatello, M., Segre, A.L., Macromoleucles 30 (1997) 6251

zhou07

Zhou, Z., Kuemmerle, R., Qiu, X., Redwine, D., Cong, R., Taha, A., Baugh, D. Winniford, B., J. Mag. Reson. 187 (2007) 225

busico07

Busico, V., Carbonniere, P., Cipullo, R., Pellecchia, R., Severn, J., Talarico, G., Macromol. Rapid Commun. 2007, 28, 1128

resconi00

Resconi, L., Cavallo, L., Fait, A., Piemontesi, F., Chem. Rev. 2000, 100, 1253

**Gel content determination:**

Gel count:

A cast film sample of about 70 $\mu$m thickness, is extruded and examined with a CCD (Charged-Coupled Device) camera, image processor and evaluation software (Insstrument: OCS-FSA100, supplier OCS GmbH (Optical Control System)). The film defects are measured and classified according to their size (longest dimension).
5
Cast film preparation, extrusion parameters:

1. Output 25$\pm$4g/min
2. Extruder temperature profile: 230-230-230-220-210 (Melt temp 223°C)
3. Film thickness about 70 $\mu$m
4. Chill Roll temperature 65-75°C
5. No Air knife needed

Technical data for the extruder:

1. Screw type: 3 Zone, nitrated
2. Screw diameter: 30 mm
3. Screw length: 25D
4. Feeding zone: 10D
5. Compression zone: 4D
6. Die 150mm

The defects were classified according to the size $(\mu m)/m^2$:

100-299
300-599
600-999
>999
F+I: Flow marks (=arrow heads and other flow defects than gels)

**Rheological properties:**

**Dynamic Shear Measurements (frequency sweep measurements)**

The characterization of polymer melts by dynamic shear measurements complies with ISO standards 6721-1 and 6721-10. The measurements were performed on an Anton Paar MCR501 stress controlled rotational rheometer, equipped with a 25 mm parallel plate geometry. Measurements were undertaken on compression moulded plates using nitrogen atmosphere and setting a strain within the linear viscoelastic regime. The oscillatory shear tests were done at 190°C applying a frequency range between 0.0154 and 500 rad/s and setting a gap of 1.2 mm.

In a dynamic shear experiment the probe is subjected to a homogeneous deformation at a sinusoidal varying shear strain or shear stress (strain and stress controlled mode, respectively). On a controlled strain experiment, the probe is subjected to a sinusoidal strain that can be expressed by

$$\gamma(t) = \gamma_0 \sin(\omega t) \qquad (1)$$

If the applied strain is within the linear viscoelastic regime, the resulting sinusoidal stress response can be given by

$$\sigma(t) = \sigma_0 \sin(\omega t + \delta) \tag{2}$$

where $\sigma_0$, and $\gamma_0$ are the stress and strain amplitudes, respectively; $\omega$ is the angular frequency; $\delta$ is the phase shift (loss angle between applied strain and stress response); t is the time.

Dynamic test results are typically expressed by means of several different rheological functions, namely the shear storage modulus, G', the shear loss modulus, G", the complex shear modulus, G*, the complex shear viscosity, $\eta$*, the dynamic shear viscosity, $\eta$', the out-of-phase component of the complex shear viscosity, $\eta$", and the loss tangent, tan $\eta$, which can be expressed as follows:

$$G' = \frac{\sigma_0}{\gamma_0} \cos\delta \ [Pa] \tag{3}$$

$$G'' = \frac{\sigma_0}{\gamma_0} \sin\delta \ [Pa] \tag{4}$$

$$G^* = G' + iG'' \ [Pa] \tag{5}$$

$$\eta^* = \eta' - i\eta'' \ [Pa \cdot s] \tag{6}$$

$$\eta' = \frac{G''}{\omega} \ [Pa \cdot s] \tag{7}$$

$$\eta'' = \frac{G'}{\omega} \ [Pa \cdot s] \tag{8}$$

Besides the above mentioned rheological functions one can also determine other rheological parameters such as the so-called elasticity index EI(x). The elasticity index EI(x) is the value of the storage modulus, G', determined for a value of the loss modulus, G", of x kPa and can be described by equation 9.

$$EI(x) = G' \ for \ (G'' = x \ kPa) \ [Pa] \tag{9}$$

For example, the EI(5 kPa) is defined by the value of the storage modulus G', determined for a value of G" equal to 5 kPa.

The determination of so-called Shear Thinning Indexes is done, as described in equation 10.

$$SHI\left(\frac{x}{y}\right) = \frac{Eta \ for (G^* = x \ kPa)}{Eta \ for (G^* = y \ kPa)} \ [Pa] \tag{10}$$

For example, the $SHI_{(2.7/210)}$ is defined by the value of the complex viscosity, in Pa.s, determined for a value of G* equal to 2.7 kPa, divided by the value of the complex viscosity, in Pa.s, determined for a value of G* equal to 210 kPa.

The values of storage modulus (G'), loss modulus (G"), complex modulus (G*) and complex viscosity ($\eta$*) were obtained as a function of frequency ($\omega$).

Thereby, e.g. $\eta^*_{300rad/s}$ (eta*$_{300rad/s}$) is used as abbreviation for the complex viscosity at the frequency of 300 rad/s and $\eta^*_{0.05rad/s}$ (eta*$_{0.05rad/s}$) is used as abbreviation for the complex viscosity at the frequency of 0.05 rad/s.

The values are determined by means of a single point interpolation procedure, as defined by Rheoplus software.

In situations for which a given G* value is not experimentally reached, the value is determined by means of an extrapolation, using the same procedure as before. In both cases (interpolation or extrapolation), the option from Rheoplus "*Interpolate y-values to x-values from parameter*" and the "*logarithmic interpolation type*" were applied.

It is noted herein, that in the present inventive polymer composition there is no need to determine the G* value by means of extrapolation, since G* equal to 2.7 kPa and G* equal to 210 kPa are within the frequence range of 0.05 to 300 rad/s.

References:

[1] Rheological characterization of polyethylene fractions" Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362

[2] The influence of molecular structure on some rheological properties of polyethylene", Heino, E.L., Borealis Polymers Oy, Porvoo, Finland, Annual Transactions of the Nordic Rheology Society, 1995.).

[3] Definition of terms relating to the non-ultimate mechanical properties of polymers, Pure & Appl. Chem., Vol. 70, No. 3, pp. 701-754, 1998.

**Experimental part**

**Preparation of examples**

**Example 1: polyethylene produced in the presence of a single site catalyst (a) (=ssPE (a)) of the polymer composition of the invention, referred below tables as SSPE1**

**Cat.Example: Catalyst preparation**

130 grams of a metallocene complex bis(1-methyl-3-n-butylcyclopentadienyl) zirconium (IV) dichloride (CAS no. 151840-68-5), and 9.67 kg of a 30% solution of commercial methylalumoxane (MAO) in toluene were combined and 3.18 kg dry, purified toluene was added. The thus obtained complex solution was added onto 17 kg silica carrier Sylopol 55 SJ (supplied by Grace) by very slow uniform spraying over 2 hours. The temperature was kept below 30°C. The mixture was allowed to react for 3 hours after complex addition at 30°C.

**Polymerisation of SSPE1:**

Prepolymerisation: A loop reactor having a volume of 50 dm$^3$ was operated at a temperature of 60 °C and a pressure of 65 bar. Into the reactor were introduced 2.5 kg/h ethylene, 30 kg/h propane diluent and 50 g/h 1-butene. Also 15 g/h of catalyst of cat.example was introduced into the reactor. The polymer production rate was about 2 kg/h.

Polymerisation:

The slurry from the reactor was withdrawn intermittently and directed into a loop reactor having a volume of 500 dm$^3$ and which was operated at 85 °C temperature and 64 bar pressure. Into the reactor was further added 27 kg/h of propane and ethylene together with 1-butene comonomer and hydrogen so that the ethylene content in the reaction mixture was 5 mol-%, the molar ratio of hydrogen to ethylene was 0.3 mol/kmol and the ratio of 1-butene to ethylene was 100 mol/kmol. The production rate of ethylene copolymer having a melt index MFR$_2$ of 6 g/10 min, 1-butene comonomer content of 0.7 mol-%, and density of 940 kg/m3 was 44 kg/h.

The slurry was withdrawn from the loop reactor intermittently by using settling legs and directed to a flash vessel operated at a temperature of 50 °C and a pressure of 3 bar. From there the polymer was directed to a gas phase reactor (GPR) operated at a pressure of 20 bar and a temperature of 75 °C. Additional ethylene, 1-hexene comonomer, nitrogen as inert gas and hydrogen were added so that the ethylene content in the reaction mixture was 33 mol-%, the ratio of hydrogen to ethylene was 0.3 mol/kmol and the ratio of 1-hexene to ethylene was 42 mol/kmol. The polymer production rate in the gas phase reactor was 61 kg/h and thus the total polymer withdrawal rate from the gas phase reactor was 105 kg/h. The polymer had a melt index MFR$_2$ of 1.3 g/10 min, total comonomer content of 2.8 mol-% and a density of 919 kg/m$^3$. The production split (% Loop/%GPR components) was 42/58. The amount of the prepolymerisation product was calculated to the amount of the Loop product.

| Table 1. Polymersation conditions and polymer properties of SSPE1 | | |
|---|---|---|
| Polymerisation conditions and polymer properties | Unit | Inv.Example 1 |
| Prepolymerisation | | |
| Loop H2/C2 <br> Loop C4/C2 | Mol/kmol <br> Mol/kmol | 0.3 <br> 100 |
| Loop $MFR_2$ <br> Loop Density | g/10min <br> kg/m3 | 6 <br> 940 |
| GPR H2/C2 <br> GPR C6/C2 | Mol/kmol <br> Mol/kmol | 0.3 <br> 42 |
| $MFR_2$ of GPR (calculated) | g/10 min | 0.6 |
| Production split (Loop/GPR) | wt-%/wt-% | 42/58 |
| Final $MFR_2$ <br> Final Density | g/10min <br> kg/m3 | 1.3 <br> 919 |

**Example 2: ssPE (2) referred below as SSPE2**

Example 1 was repeated except the polymerisation conditions were adapted in a known manner to result in SSPE2, having $MFR_2$=1.6 and density 918 kg/m$^3$. A batch of SSPE2 with high gel level (due to disturbance in the production) was selected for the blending test.

**Polyethylene having SHI (2.7/210) of at least 10 (b) (=PE (b)), referred below tables as LDPE (MI=0.3), LDPE (MI=2.2) or znLLDPE**

**LDPE (MI=0.3)**, commercially available low density polyethylene homopolymer produced in a high pressure autoclave reactor, supplied by Borealis under tradename FA3221 (density 922 kg/m$^3$, $MFR_2$ 0.3 g/10 min and SHI (2.7/210) 186.

**LDPE (MI=2.2),** commercially available low density polyethylene homopolymer produced in a high pressure autoclave reactor, supplied by Borealis under tradename FA6220 (density 922 kg/m$^3$, $MFR_2$ 2.2 g/10 min and SHI (2.7/210) 66.

**znLLDPE,** commercially available LLDPE produced using a conventional Ziegler Natta catalyst, supplied by Borealis under tradename FX1001 (density 931 kg/m3, $MFR_5$ 0.9 and SHI (2.7/210) 27).

**Compounding of the polymer compositions of the invention (process of the invention):**

The ssPE (a) component alone (reference), PE (b) component alone (reference) or both ssPE (a) in an amount of 90, 80 or 70 wt% and PE (b), respectively, in amounts of 10, 20 or 30 wt% (combined amount of ssPE (a) and PE (b) totalling 100 wt%), as identified below and in tables, were subjected together with 2400 ppm of commercial Irganox B561 additive to a JSW CIMP90 counter-rotating twinscrew extruder. Then the obtained mixture was meltmixed (compounded) under nitrogen atmosphere and pelletised to pellet form. The extruder had two mixing zones, residence time of 1 minute so that the SEI was 220-230 kWh/kg and the melt temperature 240-250 °C.

Blending results of SSPE1 with LDPEs:

**Table 1: Measured gel contents for SSPE1 and for blends of SSPE1 with LDPEs**

| | Gels ($\mu$m) and Flow Marks, pcs/m2 | | | | | MFR2 | SHI | G' |
|---|---|---|---|---|---|---|---|---|
| | 100-299 | 300-599 | 600-999 | >999 | F+I | g/10 min | 2.7/210 kPa | 5 kPa |
| | | | | | | | | |
| SSPE1 (100%) reference | 598 | 106 | 13 | 2 | 8 | 1,3 | 3 | 550 |
| SSPE1 + 10% LDPE (MI=0.3) | 540 | 66 | 6 | 0 | 4 | 1,1 | 4 | 944 |
| SSPE1 + 20% LDPE (MI=0.3) | 289 | 26 | 2 | 0 | 4 | 0,9 | 6 | 1340 |

(continued)

|  | Gels (μm) and Flow Marks, pcs/m2 | | | | | MFR2 | SHI | G' |
|---|---|---|---|---|---|---|---|---|
|  | 100-299 | 300-599 | 600-999 | >999 | F+I | g/10 min | 2.7/210 kPa | 5 kPa |
|  |  |  |  |  |  |  |  |  |
| SSPE1 + 10% LDPE (MI=2.2) | 338 | 35 | 5 | 1 | 3 | 1,3 | 4 | 784 |
| SSPE1 + 20% LDPE (MI=2.2) | 422 | 41 | 2 | 1 | 3 | 1,1 | 5 | 994 |

**Table 2: Measured gel contents of LDPEs used for the blends**

|  | Gels (μm) and Flow Marks, pcs/m2 | | | | | SHI | G' |
|---|---|---|---|---|---|---|---|
|  | 100-299 | 300-599 | 600-999 | >999 | F+I | 2.7/210 kPa | 5 kPa |
|  |  |  |  |  |  |  |  |
| LDPE (MI=0.3, D=922) | 616 | 99 | 3 | 0 | 7 | 186 | 3170 |
| LDPE (MI=2.2, D=922) | 941 | 164 | 5 | 1 | 7 | 66 | 2500 |

Melt mixing of two different polymers leads normally to a blend having higher gel content than the gel content of said blend which would be expectable from the calculation (= calculated from the linear formulation (I)) based on share and gel count of individual components. The reason for the actual higher gel content is the incomplete mixing of the components.

The calculation for the "lowest expectable" gel count of the blend according to the linear formulation (I) was as follows:

[weight fraction of SSPE] * [gels of SSPE] + [weight fraction of LDPE] * [gels of LDPE] (I)

(calculated values in table 3).

**Table 3: "Lowest expectable" gel contents based on the calculation according to the linear formulation (I):**

[weight fraction of SSPE] * [gels of SSPE] + [weight fraction of LDPE] * [gels of LDPE] (I)

|  | Gels (μm) and Flow Marks, pcs/m2 | | | | |
|---|---|---|---|---|---|
|  | 100-299 | 300-599 | 600-999 | >999 | F+I |
|  |  |  |  |  |  |
| SSPE1 (100%) reference | 598 | 106 | 13 | 2 | 8 |
| SSPE1 + 10% LDPE (MI=0.3) | 600 | 105 | 12 | 2 | 8 |
| SSPE1 + 20% LDPE (MI=0.3) | 667 | 118 | 11 | 2 | 8 |
| SSPE1 + 10% LDPE (MI=2.2) | 632 | 112 | 12 | 2 | 8 |
| SSPE1 + 20% LDPE (MI=2.2) | 667 | 118 | 11 | 2 | 8 |

Based on the results above, gel contents of SSPE1+LDPE blends (table 1) are surprisingly lower than the calculated "lowest expectable" gel contents (table 3).

Blending results of SSPE2 with LDPEs:

**Table 4 Measured gel contents for SSPE2 and for blends with LDPEs**

| | Gels (μm) and Flow Marks, pcs/m2 | | | | | | MFR2 | SHI | G' |
|---|---|---|---|---|---|---|---|---|---|
| | 100-299 | 300-599 | 600-999 | >999 | F+I | | g/10 min | 2.7/210 kPa | 5 kPa |
| SSPE2 (100%) reference | 6254 | 815 | 36 | 2 | 26 | | 1,6 | 3 | 525 |
| SSPE2 + 10% LDPE (MI=0.3) | 3287 | 435 | 31 | 1 | 4 | | 1,3 | 4 | 918 |
| SSPE2 + 20% LDPE (MI=0.3) | 2408 | 318 | 24 | 0 | 5 | | 1,2 | 6 | 1320 |
| SSPE2 + 10% LDPE (MI=2.2) | 3597 | 491 | 29 | 1 | 7 | | 1,5 | 4 | 765 |
| SSPE2 + 20% LDPE (MI=2.2) | 2854 | 353 | 28 | 1 | 3 | | 1,4 | 5 | 985 |
| SSPE2 + 30% LDPE (MI=2.2) | 2311 | 285 | 20 | 1 | 3 | | 1,4 | 6 | 1210 |

**Table 5: Measured gel contents for LDPEs used for blends**

| | Gels (μm) and Flow Marks, pcs/m2 | | | | | | SHI | G' |
|---|---|---|---|---|---|---|---|---|
| | 100-299 | 300-599 | 600-999 | >999 | F+I | | 2.7/210 kPa | 5 kPa |
| LDPE (MI=0.3, D=922) | 616 | 99 | 3 | 0 | 7 | | 186 | 3170 |
| LDPE (MI=2.2, D=922) | 941 | 164 | 5 | 1 | 7 | | 66 | 2500 |

**Table 6: "Lowest expectable" gel content based on the calculation according to the linear formulation (I):**

| [weight fraction of SSPE] * [gels of SSPE] + [weight fraction of LDPE] * [gels of LDPE] (I) | | | | | |
|---|---|---|---|---|---|
| | Gels (μm) and Flow Marks, pcs/m2 | | | | |
| | 100-299 | 300-599 | 600-999 | >999 | F+I |
| SSPE2 (100%) reference | 6254 | 815 | 36 | 2 | 26 |
| SSPE2 + 10% LDPE (MI=0.3) | 5690 | 743 | 33 | 2 | 24 |
| SSPE2 + 20% LDPE (MI=0.3) | 5126 | 672 | 29 | 2 | 23 |
| SSPE2 + 10% LDPE (MI=2.2) | 5723 | 750 | 33 | 2 | 25 |
| SSPE2 + 20% LDPE (MI=2.2) | 5191 | 685 | 30 | 2 | 23 |
| SSPE2 + 30% LDPE (MI=2.2) | 4660 | 620 | 27 | 2 | 21 |

Based on the results above, gel contents of SSPE2+LDPE blends (table 4) are surprisingly lower than the calculated "lowest expectable" gel contents (table 6) as can be seen also in figures 1-4. Figures 1-4 illusterate the measured and calculated "lowest expectable" gel contents of the blends of SSPE2 + LDPE in different size categories. It can be seen from measured blending results of both low gel content SSPE1 and high gel content SSPE2 resins that with the blending process of the invention gels can be reduced more that would be expected from the "lowest expectable" calculation. In the figures the "lowest expectable" is indicated as dashed lines ----- and, respectively, -- -- --.

Blending results of SSPE1 with ZNLLDPE:

**Table 7: Measured gel contents for SSPE1 and for blend with Ziegler-Natta LLDPE (FX1001)**

| | Gels, pcs/m2 | MFR2 | SHI | G' |
|---|---|---|---|---|
| | >999 μm | g/10 min | 2.7/210 kPa | 5 kPa |
| SSPE1 (100%) reference | 2 | 1,3 | 3 | 515 |

(continued)

|  | Gels, pcs/m2 | MFR2 | SHI | G' |
|---|---|---|---|---|
|  | >999 $\mu$m | g/10 min | 2.7/210 kPa | 5 kPa |
| SSPE1 + 10% ZNLLDPE | 0 | 1,1 | 4 | 870 |

**Table 8: Measured gel contents for ZNLLDPE used for blend**

|  | Gels, pcs/m2 | MFR2 | SHI | G' |
|---|---|---|---|---|
|  | >999 $\mu$m | g/10 min | 2.7/210 kPa | 5 kPa |
| ZNLLDPE (MI=0.2, D=931) | 0 | 0,2 | 27 | 2000 |

**Table 9: "Lowest expectable" gel content based on the calculation according to the linear formulation (I):**

| [weight fraction of SSPE] * [gels of SSPE] + [weight fraction of ZNLLDPE] * [gels of ZNLLDPE] (I) | |
|---|---|
|  | Gels, pcs/m2 |
|  | >999 $\mu$m |
|  |  |
| SSPE1 (100%) reference | 2 |
| SSPE1 + 10% ZNLLDPE | 2 |

Based on the results above (table 7), ZNLLDPE as PE (b) can be also used as blending component to reduce gels of ssPE (a).

**Claims**

1.  A process for producing by extrusion a polymer composition, wherein the process comprises the steps of:

    (i) subjecting into a twinscrew extruder

    (a) 60 to 99 wt% of a multimodal polyethylene produced in the presence of a single site catalyst (ssPE) which has an $MFR_2$ (according to ISO 1133 at 190°C under 2.16 kg load) of less than 7 g/10 min,
    (b) 1 to 40 wt% of a polyethylene having SHI (2.7/210) of at least 10 (when measured as described in the specification under Determination methods) (PE), based on the combined amount (100 wt%) of ssPE (a) and PE (b); and
    (c) optionally additives;

    (ii) meltmixing the components (a) to (c) in the twinscrew extruder to form a meltmix of the polymer composition; and
    (iii) providing the obtained meltmix polymer composition into a solid form.

2.  The process according to claim 1, wherein the twinscrew is a selected from a co-rotating or a counter-rotating twinscrew extruder.

3.  The process according to any of the preceding claims, wherein the twinscrew has one or more in any order, preferably all, of the following properties:

    - Energy input (SEI) is from about 120 to 400, preferably 130 to about 400, kWh/ton polymer,
    - Residence time of 0.2 to 5 min, and/or
    - Screw comprises at least one mixing zone.

4. The process according to any of the preceding claims, wherein the solid form of polymer composition in step (iii) is provided as solid powder or pellets, preferably as solid pellets.

5. The process according to any of the preceding claims, wherein the process comprises after the step (iii) a further step of:
(iv) using the obtained polymer composition in solid form, preferably in form of solid pellets, for producing an article, preferably a film selected from a monolayer or multilayer film.

6. The process according to any of the preceding claims, wherein the polymer composition has a gel content of less than the gel content of the polyethylene produced in the presence of a single site catalyst (ssPE (a)) alone, preferably the gel content of the polymer composition is less than calculated from the linear formulation (I) based on the weight fractions and gel contents of the ssPE (a) and PE having SHI (2.7/210) of at least 10 (PE (b)) as follows:

$$\text{(weight fraction of ssPE (a))*(gel content of ssPE (a))+(weight fraction of PE (b))*(gel content of PE (b))} \qquad \text{(I)},$$

when measured from a cast film sample as described in the specification under Determination methods and wherein the weight fraction of ssPE (a) and weight fraction of PE (b) totals on 1.0.

7. The process according to any of the preceding claims, wherein in step (i)

- the ssPE (a) is subjected in an amount of 60 to 98, preferably 70 to 95, wt%, of a polyethylene polymer; and
- the polyethylene having SHI (2.7/210) of at least 10 (PE (b)) is subjected in an amount of 2 to 40, preferably 5 to 30, wt%.

8. The process according to any of the preceding claims, wherein the polyethylene produced in the presence of a single site catalyst (ssPE (a)) has an $MFR_2$ of 0.5 to 6, g/10 min (according to ISO 1133 at 190°C under 2.16 kg load).

9. The process according to any of the preceding claims, wherein the polyethylene produced in the presence of a single site catalyst (ssPE (a)) comprises at least two different comonomers selected from alpha-olefins having from 4 to 10 carbon atoms, more preferably 1-butene and 1-hexene.

10. The process according to any of the preceding claims, wherein the polyethylene having SHI (2.7/210) of at least 10 (PE (b)) has one or more, in any order, preferably all of the below properties:

- an $MFR_2$ (according to ISO 1133 at 190°C under 2.16 kg load) of less than 6 g/10 min, preferably $MFR_2$ of 0.1 to 5 g/10 min,
- a density of 915 to 940 $kg/m^3$, and/or
- a SHI (2.7/210) of 10 to 400, preferably 15 to 300.

11. The process according to any of the preceding claims, wherein the polyethylene produced in the presence of a single site catalyst (ssPE (a)) is a multimodal polyethylene, more preferably a multimodal linear low density polyethylene (LLDPE) which has a density of is of 910 to 935 $kg/m^3$, which comprises

- an ethylene polymer component (A) and
- an ethylene polymer component (B) which is different from the ethylene polymer component (A); and

wherein the multimodal polyethylene ssPE (a) is multimodal at least with respect to comonomer type and/or comonomer content, preferably wherein the alpha-olefin comonomer having from 4 to 10 carbon atoms of ethylene polymer component (A) is different from the alpha-olefin comonomer having from 4 to 10 carbon atoms of ethylene polymer component (B), preferably wherein the alpha-olefin comonomer having from 4 to 10 carbon atoms of ethylene polymer component (A) is 1-butene and the alpha-olefin comonomer having from 4 to 10 carbon atoms of ethylene polymer component (B) is 1-hexene.

12. The process according to any of the preceding claims, wherein the polyethylene having SHI (2.7/210) of at least 10 (PE (b)) is selected from a low density polyethylene produced in the presence of a radical initiator(s) (LDPE) or a linear low density polyethylene produced using a Ziegler Natta catalyst (znLLDPE), more preferably the PE having SHI (2.7/210) of at least 10 (PE (b)) is an LDPE.

13. The use of a polyethylene having SHI (2.7/210) of at least 10 (PE (b)) (when measured as described in the specification under Determination methods) for reducing the gel content of a polyethylene polymer produced in the presence of a coordination catalyst (PE (a));

- by adding 1 to 40 wt% of the polyethylene having SHI (2.7/210) of at least 10 (PE (b)) to 60 to 99 wt% of the polyethylene polymer produced in the presence of a coordination catalyst (ssPE (a)), based on the combined amount (100 wt%) of polyethylene having SHI (2.7/210) of at least 10 (PE (b) and the polyethylene polymer produced in the presence of a coordination catalyst (PE (a)), in an extruder;
- by meltmixing the components in the extruder to form a meltmix of the polymer composition; and
- by providing the obtained meltmix polymer composition into a solid form, wherein the polyethylene (ssPE (a)) is produced in the presence of a single site catalyst (ssPE) and has a MFR$_2$ (according to ISO 1133 at 190°C under 2.16 kg load) of less than 7 g/10 min.

14. The use according to claim 13, wherein the use comprises a process comprising the steps of:

(i) subjecting into a twinscrew extruder

(a) 60 to 99 wt% of the polyethylene produced in the presence of a single site catalyst (ssPE (a)) and having an MFR$_2$ (according to ISO 1133 at 190°C under 2.16 kg load) of less than 7 g/10 min,
(b) 1 to 40 wt% of the polyethylene having SHI (2.7/210) of at least 10 (when measured as described in the specification under Determination methods) (PE (b)), based on the combined amount (100 wt%) of ssPE (a) and PE (b); and
(c) optionally additives;

(ii) meltmixing the components (a) to (c) in a twinscrew extruder to form a meltmix of the polymer composition; and
(iii) providing the obtained meltmix polymer composition into a solid form;

as defined in any of the preceding claims 1-12.


**Patentansprüche**

1. Verfahren zur Herstellung einer Polymer-Zusammensetzung durch Extrusion, wobei das Verfahren die Schritte umfasst von:

(i) Unterziehen in einem Doppelschnecken-Extruder

(a) 60 bis 99 Gew.-% eines multimodalen Polyethylens, das in Gegenwart eines Single-Site-Katalysators (ssPE) hergestellt wird, das eine MFR$_2$ (gemäß ISO 1133 bei 190°C unter 2,16 kg Last) von weniger als 7 g/10 min aufweist,
(b) 1 bis 40 Gew.-% eines Polyethylens mit SHI (2,7/210) von mindestens 10 (wenn, wie in der Beschreibung unter Bestimmungs-Verfahren beschrieben, gemessen wird) (PE), bezogen auf die Gesamtmenge (100 Gew.-%) von ssPE (a) und PE (b); und
(c) gegebenenfalls Additive;

(ii) Schmelzmischen der Komponenten (a) bis (c) im Doppelschnecken-Extruder zum Bilden einer Schmelzmischung der Polymer-Zusammensetzung; und
(iii) Bereitstellen der erhaltenen Schmelzmischungs-Polymer-Zusammensetzung in einer festen Form.

2. Verfahren nach Anspruch 1, wobei die Doppelschnecke ausgewählt ist aus einem gleichlaufenden oder gegenläufigen Doppelschnecken-Extruder.

3. Verfahren nach einem der vorangehenden Ansprüche, wobei die Doppelschnecke eine oder mehrere in beliebiger Reihenfolge, vorzugsweise alle, der folgenden Eigenschaften aufweist:

- Energieeintrag (SEI) liegt bei etwa 120 bis 400, vorzugsweise 130 bis etwa 400, kWh/t Polymer,

- Verweilzeit von 0,2 bis 5 min, und/oder
- Schnecke umfasst mindestens eine Mischzone.

4. Verfahren nach einem der vorangehenden Ansprüche, wobei die feste Form der Polymer-Zusammensetzung in Schritt (iii) als festes Pulver oder Pellets, vorzugsweise als feste Pellets, bereitgestellt wird.

5. Verfahren nach einem der vorangehenden Ansprüche, wobei das Verfahren nach dem Schritt (iii) einen weiteren Schritt umfasst von:
(iv) Verwenden der erhaltenen Polymer-Zusammensetzung in fester Form, vorzugsweise in Form von festen Pellets, zur Herstellung eines Gegenstands, vorzugsweise einer Folie, ausgewählt aus einer einschichtigen oder mehrschichtigen Folie.

6. Verfahren nach einem der vorangehenden Ansprüche, wobei die Polymer-Zusammensetzung einen Gel-Gehalt aufweist, der weniger ist als der Gel-Gehalt des in Gegenwart eines Single-Site-Katalysators (ssPE (a)) allein hergestellten Polyethylens, vorzugsweise ist der Gel-Gehalt der Polymer-Zusammensetzung kleiner als aus der linearen Formulierung (I) berechnet, bezogen auf die Gewichtsanteile und Gel-Gehalte des ssPE (a) und PE mit SHI (2,7/210) von mindestens 10 (PE (b)) wie folgt:

```
(Gewichtsanteil von ssPE (a)) * (Gel-Gehalt von ssPE
(a)) + (Gewichtsanteil von PE (b)) * (Gel-Gehalt von PE
(b))        (I),
```

wenn an einer Gießfolienprobe, wie in der Beschreibung unter Bestimmungs-Verfahren beschrieben, gemessen wird und wobei der Gewichtsanteil von ssPE (a) und der Gewichtsanteil von PE (b) insgesamt auf 1,0 liegt.

7. Verfahren nach einem der vorangehenden Ansprüche, wobei in Schritt (i)

- das ssPE (a) in einer Menge von 60 bis 98, vorzugsweise 70 bis 95, Gew.-% eines Polyethylen-Polymers unterzogen wird; und
- das Polyethylen mit SHI (2,7/210) von mindestens 10 (PE (b)) in einer Menge von 2 bis 40, vorzugsweise 5 bis 30, Gew.-% unterzogen wird.

8. Verfahren nach einem der vorangehenden Ansprüche, wobei das in Gegenwart eines Single-Site-Katalysators (ssPE (a)) hergestellte Polyethylen eine $MFR_2$ von 0,5 bis 6 g/10 min (gemäß ISO 1133 bei 190°C unter 2,16 kg Last) aufweist.

9. Verfahren nach einem der vorangehenden Ansprüche, wobei das in Gegenwart eines Single-Site-Katalysators (ssPE (a)) hergestellte Polyethylen mindestens zwei verschiedene Comonomere umfasst, ausgewählt aus alpha-Olefinen mit 4 bis 10 Kohlenstoffatomen, bevorzugter 1-Buten und 1-Hexen.

10. Verfahren nach einem der vorangehenden Ansprüche, wobei das Polyethylen mit SHI (2,7/210) von mindestens 10 (PE (b)) eine oder mehrere, in beliebiger Reihenfolge, vorzugsweise alle der folgenden Eigenschaften aufweist:

- eine $MFR_2$ (gemäß ISO 1133 bei 190°C unter 2,16 kg Last) von weniger als 6 g/10 min, vorzugsweise $MFR_2$ von 0,1 bis 5 g/10 min,
- eine Dichte von 915 bis 940 $kg/m^3$, und/oder
- eine SHI (2,7/210) von 10 bis 400, vorzugsweise 15 bis 300.

11. Verfahren nach einem der vorangehenden Ansprüche, wobei das in Gegenwart eines Single-Site-Katalysators (ssPE (a)) hergestellte Polyethylen ein multimodales Polyethylen ist, bevorzugter ein multimodales lineares Polyethylen niedriger Dichte (LLDPE), das eine Dichte von 910 bis 935 $kg/m^3$ aufweist, das umfasst

- eine Ethylen-Polymer-Komponente (A) und
- eine Ethylen-Polymer-Komponente (B), die sich von der Ethylen-Polymer-Komponente (A) unterscheidet; und

wobei das multimodale Polyethylen ssPE (a) mindestens in Bezug auf den Comonomer-Typ und/oder den Comonomer-Gehalt multimodal ist, vorzugsweise wobei sich das alpha-Olefin-Comonomer mit 4 bis 10 Kohlenstoffatomen der Ethylen-Polymer-Komponente (A) von dem alpha-Olefin-Comonomer mit 4 bis 10 Kohlenstoffatomen der Ethylen-Polymer-Komponente (B) unterscheidet, vorzugsweise wobei das alpha-Olefin-Comonomer mit 4 bis 10 Kohlenstoffatomen der Ethylen-Polymer-Komponente (A) 1-Buten ist und das alpha-Olefin-Comonomer mit 4 bis 10 Kohlenstoffatomen der Ethylen-Polymer-Komponente (B) 1-Hexen ist.

**12.** Verfahren nach einem der vorangehenden Ansprüche, wobei das Polyethylen mit SHI (2,7/210) von mindestens 10 (PE (b)) ausgewählt ist aus einem Polyethylen niedriger Dichte, das in Gegenwart eines Radikalstarter(s/n) (LDPE) hergestellt wird, oder eines linearen Polyethylens niedriger Dichte, das unter Verwendung eines Ziegler-Natta-Katalysators (znLLDPE) hergestellt wird, bevorzugter das PE mit SHI (2,7/210) von mindestens 10 (PE (b)) ein LDPE ist.

**13.** Verwendung eines Polyethylens mit SHI (2,7/210) von mindestens 10 (PE (b)) (wenn, wie in der Beschreibung unter Bestimmungs-Verfahren beschrieben, gemessen wird) zum Vermindern des Gel-Gehalts eines Polyethylen-Polymers, das in Gegenwart eines Koordinations-Katalysators (PE (a)) hergestellt wird;

- durch Zugabe von 1 bis 40 Gew.-% des Polyethylens mit SHI (2,7/210) von mindestens 10 (PE (b)) bis 60 bis 99 Gew.-% des in Gegenwart eines Koordinations-Katalysators (ssPE (a)) hergestellten Polyethylen-Polymers, bezogen auf die kombinierte Menge (100 Gew.-%) an Polyethylen mit SHI (2,7/210) von mindestens 10 (PE (b)) und dem in Gegenwart eines Koordinations-Katalysators (PE (a)) hergestellten Polyethylen-Polymer, in einem Extruder;
- durch Schmelzmischen der Komponenten im Extruder, um eine Schmelzmischung der Polymer-Zusammensetzung zu bilden; und
- durch Bereitstellen der erhaltenen Schmelzmischungs-Polymer-Zusammensetzung in fester Form,

wobei das Polyethylen (ssPE (a)) in Gegenwart eines Single-Site-Katalysators (ssPE) hergestellt wird und eine $MFR_2$ (gemäß ISO 1133 bei 190°C unter 2,16 kg Last) von weniger als 7 g/10 min aufweist.

**14.** Verwendung nach Anspruch 13, wobei die Verwendung ein Verfahren umfasst, das die Schritte umfasst von:

(i) Unterziehen in einem Doppelschnecken-Extruder

(a) 60 bis 99 Gew.-% des in Gegenwart eines Single-Site-Katalysators (ssPE (a)) hergestellten Polyethylens und mit einer $MFR_2$ (gemäß ISO 1133 bei 190°C unter 2,16 kg Last) von weniger als 7 g/10 min,
(b) 1 bis 40 Gew.-% des Polyethylens mit SHI (2,7/210) von mindestens 10 (wenn, wie in der Beschreibung unter Bestimmungs-Verfahren beschrieben, gemessen wird) (PE (b)), bezogen auf die kombinierte Menge (100 Gew.-%) von ssPE (a) und PE (b); und
(c) gegebenenfalls Additive;

(ii) Schmelzmischen der Komponenten (a) bis (c) in einem Doppelschnecken-Extruder zum Bilden einer Schmelzmischung der Polymer-Zusammensetzung; und
(iii) Bereitstellen der erhaltenen Schmelzmischungs-Polymer-Zusammensetzung in einer festen Form,

wie in einem der vorangehenden Ansprüche 1-12 definiert.

## Revendications

**1.** Procédé pour produire par extrusion une composition de polymère, dans lequel le procédé comprend les étapes suivantes :

(i) introduction dans une extrudeuse double vis

(a) de 60 à 99 % en poids d'un polyéthylène multimodal produit en présence d'un catalyseur à un seul site (ssPE) qui a un $MFR_2$ (conformément à la norme ISO 1133 à 190°C sous une charge de 2,16 kg) inférieur à 7 g/10 min,
(b) 1 à 40 % en poids d'un polyéthylène ayant un SHI (2,7/210) d'au moins 10 (lorsqu'il est mesuré comme décrit dans la description sous la rubrique Méthodes de détermination) (PE), basés sur la quantité combinée (100 % en poids) de ssPE (a) et de PE (b) ; et

(c) éventuellement d'additifs ;

(ii) mélange à l'état fondu des composants (a) à (c) dans l'extrudeuse double vis pour former un mélange fondu de la composition de polymère ; et

(iii) mise sous forme solide de la composition de polymère mélangée à l'état fondu obtenue.

**2.** Procédé selon la revendication 1, dans lequel la double vis est choisie parmi une extrudeuse double vis à co-rotation ou à contra-rotation.

**3.** Procédé selon l'une quelconque des revendications précédentes, dans lequel la double vis a une ou plusieurs dans n'importe quel ordre, de préférence la totalité, des propriétés suivantes :

- l'entrée d'énergie (SEI) est d'environ 120 à 400, de préférence de 130 à environ 400 kWh/tonne de polymère,
- le temps de séjour est de 0,2 à 5 min, et/ou
- la vis comprend au moins une zone de mélange.

**4.** Procédé selon l'une quelconque des revendications précédentes, dans lequel la forme solide de la composition de polymère dans l'étape (iii) se présente en poudre ou pastilles solides, de préférence en pastilles solides.

**5.** Procédé selon l'une quelconque des revendications précédentes, dans lequel le procédé comprend, après l'étape (iii), une étape supplémentaire suivante : (iv) utilisation de la composition de polymère obtenue sous forme solide, de préférence sous forme de pastilles solides, pour la production d'un article, de préférence d'un film choisi parmi un film monocouche ou multicouche.

**6.** Procédé selon l'une quelconque des revendications précédentes, dans lequel la composition de polymère a une teneur en gel inférieure à la teneur en gel du polyéthylène produit en présence d'un catalyseur à un seul site (ssPE (a)) seulement, de préférence la teneur en gel de la composition de polymère est inférieure à la valeur calculée à partir de la formulation linéaire (I) basée sur les fractions pondérales et les teneurs en gel du ssPE (a) et du PE ayant un SHI (2,7/210) d'au moins 10 (PE (b)) comme suit :

```
(fraction pondérale du ssPE (a)) * (teneur en gel du ssPE
(a)) + (fraction pondérale du PE (b)) * (teneur en gel du
PE (b))         (I),
```

lorsqu'elle est mesurée à partir d'un échantillon de film coulé comme décrit dans la description sous la rubrique Méthodes de détermination, et dans lequel la fraction pondérale du ssPE (a) et la fraction pondérale du PE (b) fait au total 1,0.

**7.** Procédé selon l'une quelconque des revendications précédentes, dans lequel, dans l'étape (i),

- le ssPE (a) est introduit en une quantité de 60 à 98, de préférence de 70 à 95 % en poids d'un polymère de polyéthylène ; et
- le polyéthylène ayant un SHI (2,7/210) d'au moins 10 (PE (b)) est introduit en une quantité de 2 à 40, de préférence de 5 à 30 % en poids.

**8.** Procédé selon l'une quelconque des revendications précédentes, dans lequel le polyéthylène produit en présence d'un catalyseur à un seul site (ssPE (a)) a un $MFR_2$ de 0,5 à 6 g/10 min (conformément à la norme ISO 1133 à 190°C sous une charge de 2,16 kg).

**9.** Procédé selon l'une quelconque des revendications précédentes, dans lequel le polyéthylène produit en présence d'un catalyseur à un seul site (ssPE (a)) comprend au moins deux comonomères différents choisis parmi les alpha-oléfines ayant de 4 à 10 atomes de carbone, plus préférablement le 1-butène et le 1-hexène.

**10.** Procédé selon l'une quelconque des revendications précédentes, dans lequel le polyéthylène ayant un SHI (2,7/210) d'au moins 10 (PE (b)) a une ou plusieurs, dans n'importe quel ordre, de préférence la totalité, des propriétés ci-

dessous :

- un $MFR_2$ conformément à la norme ISO 1133 à 190°C sous une charge de 2,16 kg) inférieur à 6 g/10 min, de préférence un $MFR_2$ de 0,1 à 5 g/10 min,
- une masse volumique de 915 à 940 kg/m$^3$, et/ou
- un SHI (2,7/210) de 10 à 400, de préférence de 15 à 300.

11. Procédé selon l'une quelconque des revendications précédentes, dans lequel le polyéthylène produit en présence d'un catalyseur à un seul site (ssPE (a)) est un polyéthylène multimodal, plus préférablement un polyéthylène basse densité linéaire (LLDPE) multimodal qui a une masse volumique de 910 à 935 kg/m$^3$, qui comprend

- un composant polymère d'éthylène (A) et
- un composant polymère d'éthylène (B) qui est différent du composant polymère d'éthylène (A) ; et

dans lequel le polyéthylène multimodal ssPE (a) est multimodal au moins vis-à-vis du type de comonomère et/ou de la teneur en comonomère, de préférence dans lequel le comonomère d'alpha-oléfine ayant de 4 à 10 atomes de carbone du composant polymère d'éthylène (A) est différent du comonomère d'alpha-oléfine ayant de 4 à 10 atomes de carbone du composant polymère d'éthylène (B), de préférence dans lequel le comonomère d'alpha-oléfine ayant de 4 à 10 atomes de carbone du composant polymère d'éthylène (A) est le 1-butène et le comonomère d'alpha-oléfine ayant de 4 à 10 atomes de carbone du composant polymère d'éthylène (B) est le 1-hexène.

12. Procédé selon l'une quelconque des revendications précédentes, dans lequel le polyéthylène ayant un SHI (2,7/210) d'au moins 10 (PE (b)) est choisi parmi un polyéthylène basse densité produit en présence d'un ou plusieurs amorceurs radicalaires (LDPE) et un polyéthylène basse densité linéaire produit par utilisation d'un catalyseur de Ziegler Natta (znLLDPE), plus préférablement le PE ayant un SHI (2,7/210) d'au moins 10 (PE (b)) est un LDPE.

13. Utilisation d'un polyéthylène ayant un SHI (2,7/210) d'au moins 10 (PE (b)) (lorsqu'il est mesuré comme décrit dans la description sous la rubrique Méthodes de détermination) pour réduire la teneur en gel d'un polymère de polyéthylène produit en présence d'un catalyseur de coordination (PE (a)) ;

- par addition de 1 à 40 % en poids du polyéthylène ayant un SHI (2,7/210) d'au moins 10 (PE (b)) à 60 à 99 % en poids du polymère de polyéthylène produit en présence d'un catalyseur de coordination (ssPE (a)), basés sur la quantité combinée (100 % en poids) du polyéthylène ayant un SHI (2,7/210) d'au moins 10 (PE (b)) et du polymère de polyéthylène produit en présence d'un catalyseur de coordination (PE (a)), dans une extrudeuse ;
- par mélange à l'état fondu des composants dans l'extrudeuse pour former un mélange fondu de la composition de polymère ; et
- par mise sous forme solide de la composition de polymère mélangée à l'état fondu obtenue,

dans laquelle le polyéthylène (ssPE (a)) est produit en présence d'un catalyseur à un seul site (ssPE) et a un $MFR_2$ (conformément à la norme ISO 1133 à 190°C sous une charge de 2,16 kg) inférieur à 7 g/10 min.

14. Utilisation selon la revendication 13, dans laquelle l'utilisation comprend un procédé comprenant les étapes suivantes :

(i) introduction dans une extrudeuse double vis

(a) de 60 à 99 % en poids du polyéthylène produit en présence d'un catalyseur à un seul site (ssPE (a)) et ayant un $MFR_2$ (conformément à la norme ISO 1133 à 190°C sous une charge de 2,16 kg) inférieur à 7 g/10 min,
(b) 1 à 40 % en poids du polyéthylène ayant un SHI (2,7/210) d'au moins 10 (lorsqu'il est mesuré comme décrit dans la description sous la rubrique Méthodes de détermination) (PE (b)), basés sur la quantité combinée (100 % en poids) de ssPE (a) et de PE (b) ; et
(c) éventuellement d'additifs ;

(ii) mélange à l'état fondu des composants (a) à (c) dans une extrudeuse double vis pour former un mélange fondu de la composition de polymère ; et
(iii) mise sous forme solide de la composition de polymère mélangée à l'état fondu obtenue ;

comme défini dans l'une quelconque des revendications 1 à 12.

Figure 1

**Gels 100-299 µm of SSPE2 + LDPE Blends**

Figure 2

Gels 300-599 μm of SSPE2 + LDPE Blends

Figure 3

Figure 4

**Gels >999 μm of SSPE2 + LDPE Blends**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2014058656 A
- WO 2014003926 A
- WO 9512622 A
- WO 9632423 A
- WO 9728170 A
- WO 9832776 A
- WO 9961489 A
- WO 03010208 A
- WO 03051934 A
- WO 03051514 A
- WO 2004085499 A
- EP 1752462 A
- EP 1739103 A
- WO 9212182 A
- WO 9618662 A
- US 4582816 A
- US 3405109 A
- US 3324093 A
- EP 479186 A
- US 5391654 A
- EP 1310295 A
- EP 1591460 A
- EP 1415999 A
- WO 0026258 A
- EP 887379 A
- EP 887380 A
- EP 887381 A
- EP 991684 A
- WO 2004055068 A
- WO 2004055069 A
- EP 0810235 A

### Non-patent literature cited in the description

- **HAGSTRÖM.** *The Polymer Processing Society, Europe/Africa Region Meeting,* 19 August 1997
- Encyclopedia of Polymer Science and Engineering. 1986, vol. 6, 383-410
- Polyethylene: High-pressure. **R.KLIMESCH ; D.LITTMANN ; F.-O. MÄHLING.** Encyclopedia of Materials: Science and Technology. Elsevier Science Ltd, 2001, 7181-7184
- **KLIMKE, K. ; PARKINSON, M. ; PIEL, C. ; KAMINSKY, W. ; SPIESS, H.W. ; WILHELM, M.** *Macromol. Chem. Phys.,* 2006, vol. 207, 382
- **PARKINSON, M. ; KLIMKE, K. ; SPIESS, H.W. ; WILHELM, M.** *Macromol. Chem. Phys.,* 2007, vol. 208, 2128
- **POLLARD, M. ; KLIMKE, K. ; GRAF, R. ; SPIESS, H.W. ; WILHELM, M. ; SPERBER, O. ; PIEL, C. ; KAMINSKY, W.** *Macromolecules,* 2004, vol. 37, 813
- **FILIP, X. ; TRIPON, C. ; FILIP, C.** *J. Mag. Resn.,* 2005, vol. 176, 239
- **GRIFFIN, J.M. ; TRIPON, C. ; SAMOSON, A. ; FILIP, C. ; BROWN, S.P.** *Mag. Res. in Chem.,* 2007, vol. 45, S1, , S198
- **CASTIGNOLLES, P. ; GRAF, R. ; PARKINSON, M. ; WILHELM, M. ; GABORIEAU, M.** *Polymer,* 2009, vol. 50, 2373
- **BUSICO, V. ; CIPULLO, R.** *Prog. Polym. Sci.,* 2001, vol. 26, 443
- **BUSICO, V. ; CIPULLO, R. ; MONACO, G. ; VACATELLO, M. ; SEGRE, A.L.** *Macromoleucles,* 1997, vol. 30, 6251
- **ZHOU, Z. ; KUEMMERLE, R. ; QIU, X. ; REDWINE, D. ; CONG, R. ; TAHA, A. ; BAUGH, D. ; WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 1128
- **RESCONI, L. ; CAVALLO, L. ; FAIT, A. ; PIEMONTESI, F.** *Chem. Rev.,* 2000, vol. 100, 1253
- Rheological characterization of polyethylene fractions. **HEINO, E.L. ; LEHTINEN, A. ; TANNER J. ; SEPPÄLÄ, J.** Theor. Appl. Rheol., Proc. Int. Congr. Rheol, 11th. Neste Oy, 1992, vol. 1, 360-362
- The influence of molecular structure on some rheological properties of polyethylene. **HEINO, E.L.** Annual Transactions of the Nordic Rheology Society. Borealis Polymers Oy, 1995
- Definition of terms relating to the non-ultimate mechanical properties of polymers. *Pure & Appl. Chem.,* 1998, vol. 70 (3), 701-754
- *CHEMICAL ABSTRACTS,* 151840-68-5